## Europäisches Patentamt

## European Patent Office

## Office européen des brevets

(19)

(11) **EP 0 555 595 B1**

(12) **FASCICULE DE BREVET EUROPEEN**

(45) Date de publication et mention
de la délivrance du brevet:
**05.03.1997 Bulletin 1997/10**

(51) Int Cl.6: **H04B 7/24**, H04B 7/212

(21) Numéro de dépôt: **92400264.5**

(22) Date de dépôt: **31.01.1992**

(54) **Procédé d'allocation d'emplacements temporels dans un système de transmission à accès multiple par répartition temporelle**

Verfahren zur Zeitschlitzenzuweisung in einem Zeitmultiplex-Vielfachzugriffübertragungssystem

Method of time slot assignment in a time division multiple access transmission system

(84) Etats contractants désignés:
**AT BE CH DE ES FR GB IT LI NL SE**

(43) Date de publication de la demande:
**18.08.1993 Bulletin 1993/33**

(73) Titulaires:
- **ALCATEL CIT**
  **75008 Paris (FR)**
  Etats contractants désignés:
  **CH DE ES FR GB IT LI NL SE AT**
- **ALCATEL BELL Naamloze Vennootschap**
  **B-2018 Antwerpen 1 (BE)**
  Etats contractants désignés:
  **BE**

(72) Inventeurs:
- **Dore, Pierre**
  **F-92300 Levallois-Perret (FR)**
- **Sallaerts, Dany, c/o Bell Téléphone Man. Co. S.A.**
  **B-2018 Anvers (BE)**
- **Marcel, François**
  **F-91400 Orsay (FR)**
- **Allaire, Serge**
  **F-27170 Beaumont Le Roger (FR)**

(74) Mandataire: **El Manouni, Josiane et al**
**ALCATEL ALSTHOM,**
**Département de Propriété Industrielle,**
**30, avenue Kléber**
**75116 Paris (FR)**

(56) Documents cités:
**EP-A- 0 208 021**        **FR-A- 2 636 482**
**GB-A- 2 095 516**

**Description**

La présente invention concerne les systèmes de transmission bidirectionnelle.

On rappelle que la technique de transmission bidirectionnelle dite à l'alternat est une technique permettant de réaliser une transmission bidirectionnelle sur un unique support de transmission, suivant laquelle chaque station terminale d'un tel système de transmission, est alternativement émettrice ou réceptrice.

Suivant la vitesse de propagation des signaux transmis sur ce support, il peut alors être nécessaire de tenir compte de leur temps de propagation, et on peut ainsi être conduit à prévoir, dans le format de transmission utilisé, des intervalles de temps tenant compte de ces temps de propagation et non utilisables pour transmettre des informations. Ceci constitue évidemment un inconvénient dans la mesure où cela limite la quantité d'information transmissible au moyen de tels systèmes.

La présente invention a pour but d'éviter cet inconvénient, dans le cas de systèmes de transmission bidirectionnelle à l'alternat qui sont en outre du type point-multipoint et à accès multiple par répartition temporelle.

La présente invention est en effet applicable aux systèmes de transmission bidirectionnelle à l'alternat qui sont en outre du type point-multipoint, c'est-à-dire qui permettent des transmissions entre une station dite centrale d'une part et des stations dites distantes d'autre part, et plus particulièrement à de tels systèmes comportant, entre le point correspondant à ladite station centrale et un point appelé point de concentration, un support de transmission partagé dans le temps entre les différentes stations distantes, et, entre ledit point de concentration et chacun des points correspondant à une station distante, un support de transmission propre à chacune de ces stations distantes et de longueur variable en fonction de la position de ces stations distantes par rapport au point de concentration.

L'invention s'applique plus particulièrement encore au cas où ledit partage de support de transmission est effectué suivant la technique dite AMRT (Accès Multiple à Répartition Temporelle) c'est-à-dire avec un format de transmission structuré en trames comportant différents emplacements temporels affectés, de façon prédéterminée, respectivement aux différentes stations distantes.

La présente invention est ainsi notamment applicable aux réseaux dits de distribution utilisés dans la partie terminale, proche des usagers, d'un réseau de télécommunications, et plus particulièrement à de tels réseaux de distribution dans lesquels lesdits supports de transmission sont des fibres optiques et dans lesquels ledit point de concentration est un coupleur optique passif.

La présente invention a pour objet un procédé d'allocation d'emplacements temporels pour transmission dans un système de transmission bidirectionnelle du type point-multipoint, à accès multiple par répartition temporelle, et à l'alternat, ledit système de transmission permettant des transmissions entre une station dite centrale d'une part et des stations dites distantes d'autre part, ladite allocation étant effectuée à raison d'au moins un emplacement temporel par station distante et par sens de transmission, l'ensemble des emplacements temporels utilisés pour la transmission de la station centrale vers lesdites stations distantes étant regroupé en trames dites descendantes, l'ensemble des emplacements temporels utilisés pour la transmission des stations distantes vers la station centrale étant regroupé en trames dites montantes, et ledit procédé étant essentiellement caractérisé en ce que l'instant d'origine des trames montantes, étant, dans toute station distante, choisi de manière à ce que, dans la station centrale, l'instant d'origine de ces trames soit séparé de l'instant de fin des trames descendantes d'une durée inférieure à To, où To désigne le double du temps de propagation entre cette station distante et la station centrale, définissant ainsi, dans ladite station distante, une zone dite de recouvrement entre trames descendantes et montantes, ladite allocation d'emplacements temporels est effectuée de façon à éviter toute coïncidence d'emplacements temporels alloués à une même station distante respectivement dans les trames montantes et descendantes, dans ladite zone de recouvrement.

D'autres objets et caractéristiques de la présente invention apparaîtront à la lecture de la description suivante d'un exemple de réalisation, faite en relation avec les dessins ci-annexés dans lesquels :

- la figure 1 est un diagramme illustrant le format de transmission utilisé, suivant l'art antérieur, dans un un système de transmission bidirectionnelle du type point-multipoint, à accès multiple par répartition temporelle, et à l'alternat,

- la figure 2 est un diagramme illustrant le format de transmission utilisé, suivant l'invention, dans un système de transmission bidirectionnelle du type point-multipoint, à accès multiple par répartition temporelle et à l'alternat,

- la figure 3 est un organigramme illustrant les différentes étapes du procédé suivant l'invention,

- les figures 4 et 5 sont des diagrammes destinés à illustrer un procédé particulier de détermination du temps de propagation entre station terminale distante et station terminale centrale, respectivement dans le cas où un même support est utilisé pour les deux sens de transmission et dans le cas où deux supports distincts sont utilisés pour les deux sens de transmission, un tel procédé étant avantageusement utilisé conjointement avec le procédé suivant l'invention.

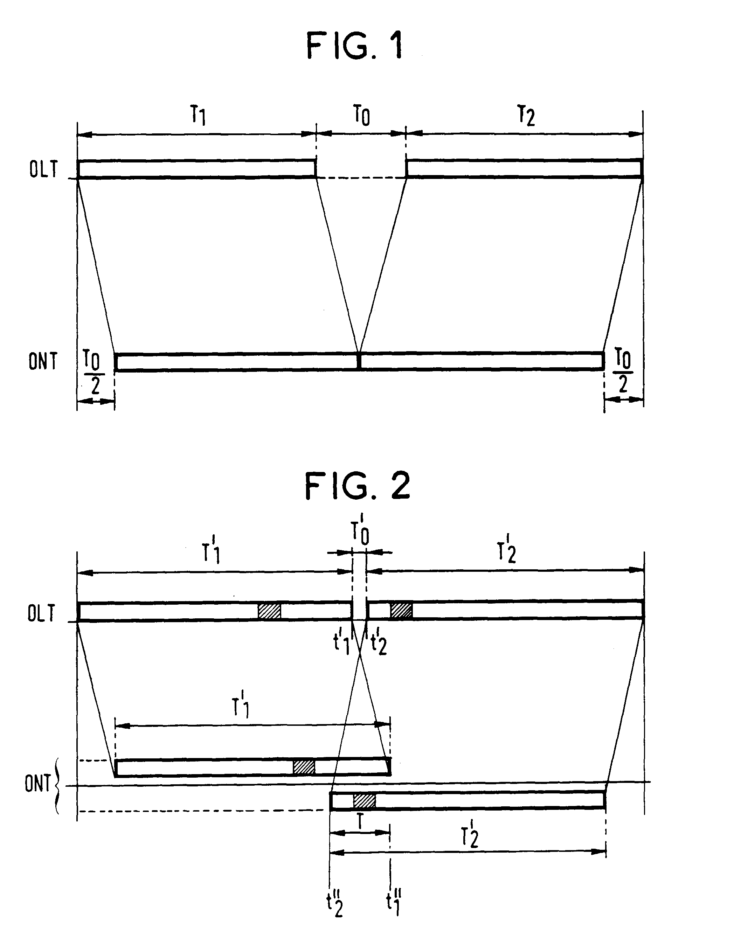

Sur la figure 1, la durée d'une trame émise par la station centrale (notée OLT) et reçue par une station distante (notée ONT), dite aussi trame descendante, est notée $T_1$, la durée d'une trame émise par une station distante et reçue par la station centrale, dite aussi trame

montante, est notée $T_2$, (avec par exemple $T_1 = T_2$) et la durée d'un intervalle de temps non utilisable, comme rappelé plus haut, pour transmettre des informations, est notée $T_o$.

Sur la figure 2, la durée de la trame descendante est notée $T'_1$, avec $T'_1 > T_1$, la durée de la trame montante est notée $T'_2$ avec $T'_2 > T_2$ (et avec par exemple $T'_1 = T'_2$) et la durée d'un intervalle de temps non utilisé pour transmettre des informations est notée $T'_o$ avec $T'_o < T_o$. Dans cet exemple cette durée $T'_o$ n'est pas nulle, mais le procédé suivant l'invention n'exclut pas que $T'_o$ puisse être nul.

Le procédé suivant l'invention est basé sur l'observation que, le système de transmission étant, comme indiqué plus haut, du type à accès multiple par répartition temporelle, une station distante peut être autorisée à émettre pendant qu'elle reçoit des informations destinées à une autre station distante.

La présente invention suppose que la directivité du coupleur utilisé pour réaliser ledit point de concentration, dans le système point-multipoint considéré, est suffisamment élevée pour que les réflexions vers les autres stations distantes, consécutives à une telle émission par une station distante, puissent être considérées comme négligeables.

La présente invention suppose par ailleurs que la récupération d'horloge effectuée en réception dans une station distante soit telle qu'elle puisse continuer à fournir ladite horloge au moment d'une interruption de la réception pour effectuer une telle émission.

Dans l'exemple de réalisation décrit la durée $T_0-T'_0$ devenue, grâce au procédé suivant l'invention, utilisable pour effectuer une transmission d'information est répartie également entre la trame descendante et la trame montante.

Comme indiqué ci-dessus, l'invention s'applique au cas de transmission suivant la technique dite AMRT (Accès Multiple à Repartition Temporelle) c'est-à-dire avec un format de transmission structuré en trames, montantes ou descendantes, comportant différents emplacements temporels affectés, de façon prédéterminée, respectivement aux différentes stations distantes.

Le procédé d'allocation d'emplacements temporels suivant l'invention vise à allouer, pour la transmission entre la station centrale et une station distante, et tel qu'illustré de façon schématique sur la figure 2, au moins un emplacement dans la trame descendante et au moins un emplacement dans la trame montante, le nombre d'emplacements à allouer étant fonction de la quantité d'informations à transmettre entre ces stations, et, en cas de pluralité d'emplacements, chacun d'eux étant alloué de façon autonome, suivant le procédé conforme à l'invention, ces différents emplacements n'étant par conséquent pas nécessairement consécutifs.

Ces différents emplacements temporels sont, dans ce qui suit, désignés par des numéros, suivant une numérotation qui :

- dans la station centrale, est attribuée de façon continûment croissante à partir d'une origine prise au début de la trame descendante, et est commune à la trame descendante et à la trame montante (en tenant bien sûr compte de l'intervalle de temps $T'o$ lorsque celui-ci n'est pas nul),

- dans une station distante,

   . pour la trame descendante est attribuée de façon continument croissante à partir d'une origine dite absolue prise au début de la trame descendante,

   . pour la trame montante, comporte un changement d'origine et est attribuée de façon continûment croissante à partir d'une origine, dite relative, prise à l'intérieur de la trame descendante.

L'instant d'origine, $t''2$, de la trame montante, prise dans une station distante, est en effet déterminé de façon à ce que l'instant d'origine, $t'2$, de cette trame, prise dans la station centrale, c'est-à-dire compte tenu du temps de propagation entre ces deux stations, coïncide avec le début de l'intervalle de temps $T'_2$. Comme il apparaît sur la figure 2, ceci conduit à prévoir, dans la station distante, un certain recouvrement entre trame descendante et trame montante. Soit ID le numéro d'emplacement, à l'intérieur de la trame descendante, qui coïncide ainsi avec le premier emplacement de la trame montante. On appelle dans ce qui suit zone de recouvrement, notée T sur la figure 2, l'ensemble des emplacements de la trame descendante ayant un numéro compris entre ID (compris) et IU (compris), où IU indique le numéro du dernier emplacement de la trame descendante.

On notera que le numéro ID est variable pour chaque station distante, étant fonction du temps de propagation entre station distante et station centrale.

La détermination de ID nécessite une mesure du temps de propagation, $\Delta T$, entre station distante et station centrale, cette mesure pouvant être effectuée suivant un procédé classique, non redécrit ici. Les paramètres $t''2$, $t'_2$, et $\Delta T$ sont en effet liés par la relation :

$$t''_2 + \Delta T = t'_2$$

ce qui, connaissant $\Delta T$ et $t'_2$ pour une station distante déterminée, permet de connaître $t''_2$, et donc ID, pour cette station distante.

En d'autres termes, l'instant d'origine $t''_2$ des trames montantes, pris dans une station distante, se situe avant l'instant de fin, $t''1$, des trames descendantes, pris dans cette station distante, et en est séparé de la durée nécessaire pour obtenir le format de transmission recherché à la station centrale, c'est-à-dire pour permettre une réduction, voire une suppression, des intervalles de temps non utilisables pour transmettre des informations.

Soient Id et Iu respectivement un numéro d'emplacement dans la trame descendante et un numéro d'emplacement dans la trame montante, à allouer pour une transmission entre la station centrale et une station distante déterminée, suivant le type de numérotation défini plus haut pour la station distante.

Dans l'exemple maintenant décrit, on suppose que le procédé d'allocation d'emplacements temporels est mis en oeuvre à la station centrale. En outre, dans cet exemple, on commence par affecter un numéro Id d'emplacement dans la trame descendante.

La seule condition à vérifier par le numéro Id est alors de constituer un numéro d'emplacement libre, c'est-à-dire non encore alloué, et d'être inférieur à Iu. Tout numéro vérifiant ces conditions peut constituer le numéro Id recherché.

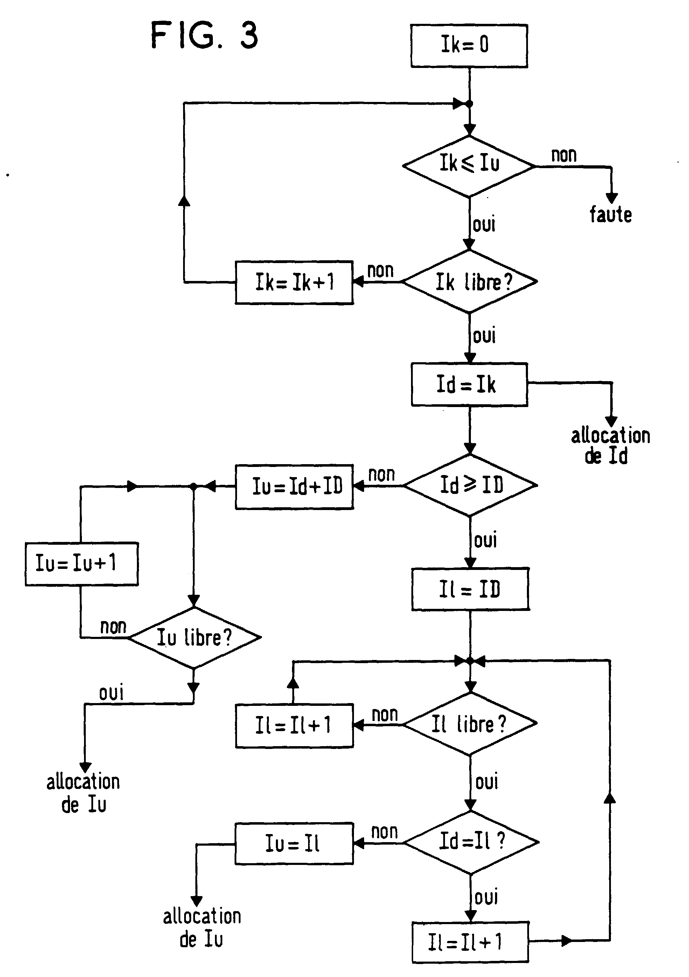

Par exemple, comme indiqué sur l'organigramme de la figure 3, le numéro Id pourra être recherché en envisageant successivement les différents emplacements de la trame descendante à partir du premier, c'est-à-dire à partir de celui ayant, dans l'organigramme de la figure 3, le numéro 0, et en vérifiant pour chacun d'eux s'il est disponible, auquel cas s'il n'est pas disponible, on envisage le suivant, et s'il est disponible, son numéro peut constituer le numéro Id recherché.

Le processus correspondant, représenté sur l'organigramme de la figure 3, utilise une variable intermédiaire, notée Ik, qui s'incrémente d'une unité à chaque détection d'indisponibilité d'un emplacement. Par ailleurs la détection d'un d'un numéro Ik supérieur à Iu conduit, comme indiqué sur l'organigramme de la figure 3, à délivrer un message de faute.

Pour l'allocation d'un numéro d'emplacement Iu dans la trame montante, on procède ensuite de la façon suivante. On détermine tout d'abord, par comparaison du numéro Id ainsi alloué avec le numéro ID défini précedemment, si l'emplacement correspondant au numéro Id ainsi alloué se situe ou non dans la zone de recouvrement.

Si cet emplacement ne se situe pas dans la zone de recouvrement, le numéro Iu est avantageusement déterminé de façon à conserver une symétrie d'allocation d'emplacements dans les trames descendantes et montantes, ce qui, compte tenu du type de numérotation adopté pour la station distante, se traduit par :

$$Iu = ID + Id$$

Ce numéro Iu ne peut cependant être retenu comme constituant le numéro Iu recherché que s'il constitue un numéro d'emplacement libre. S'il ne constitue pas un numéro d'emplacement libre, on incrémente par exemple ce numéro d'une unité, puis on refait le même test de disponibilité et ainsi de suite, jusqu'à obtenir un numéro Iu d'emplacement libre, ocmme illustré sur l'organigramme de la figure 3.

Si l'emplacement correspondant au numéro Id ainsi alloué se situe par contre dans la zone de recouvrement, il est nécessaire de vérifier que le choix de l'emplacement Iu n'entraîne pas de collision entre émission et réception ce qui, compte tenu de la numérotation adoptée pour la station distante, se traduit par le fait que le numéro Iu doit être choisi distinct de Id.

Le numéro Iu est par exemple déterminé en envisageant successivement les différents emplacements de la trame montante à partir du premier, c'est-à-dire, compte-tenu du type de numérotation adopté pour la station distante, à partir de celui ayant pour numéro ID, et en vérifiant pour chacun d'eux s'il est disponible, auquel cas, s'il n'est pas disponible on envisage le suivant, et s'il est disponible, on vérifie s'il n'y a pas identité entre le numéro de cet emplacement et le numéro Id affecté précédemment, étant entendu que s'il y a identité, on envisage un emplacement suivant, et que s'il n'y a pas identité, le numéro de cet emplacement peut être retenu comme constituant le numéro Iu recherché.

Le processus correspondant, représenté sur l'organigramme de la figure 3, utilise une variable intermédiaire, notée Il, qui s'incrémente d'une unité à chaque détection d'indisponibilité d'un emplacement.

Le procédé d'allocation d'emplacements temporels ainsi décrit peut être mis en oeuvre dans la station centrale ou dans les stations distantes, étant entendu que s'il est mis en oeuvre dans les stations distantes, une centralisation des résultats doit être effectuée à la station centrale, et des échanges entre station distante et station centrale sont nécessaires pour sa mise en oeuvre.

Un cas avantageux d'application de la présente invention consiste dans le cas où l'intervalle de temps de durée T'o défini en relation avec la figure 2 est utilisée comme fenêtre dite de positionnement, pour déterminer le temps de propagation entre station distante et station centrale, notamment lorsque cette fenêtre a une durée relativement faible, suivant le procédé particulier de détermination de temps de propagation maintenant décrit.

On rappelle tout d'abord que le temps de propagation entre une station distante et la station centrale est généralement déterminé en mesurant, dans la station distante considérée et une station distante prise pour référence, le temps séparant un instant de référence d'émission de signaux dits d'information par cette station centrale, de l'instant de réception, par cette station centrale, d'un signal, dit de positionnement, émis par cette station distante, avec un retard par rapport à un instant de référence de réception, par cette station distante, desdits signaux d'information, déterminé de façon à ce que les différents signaux de positionnement émis par les différentes stations distantes puissent être reçus dans une période de temps déterminée, dite fenêtre de positionnement, non affectée à la réception de signaux d'information.

On peut pour cela utiliser une fenêtre de positionnement de largeur relativement importante, comprenant toutes les positions intermédiaires de signaux de positionnement susceptibles de se trouver entre des positions extrêmes correspondant respectivement à la station distante la plus proche de la station centrale et à la station distante la plus éloignée de la station centrale.

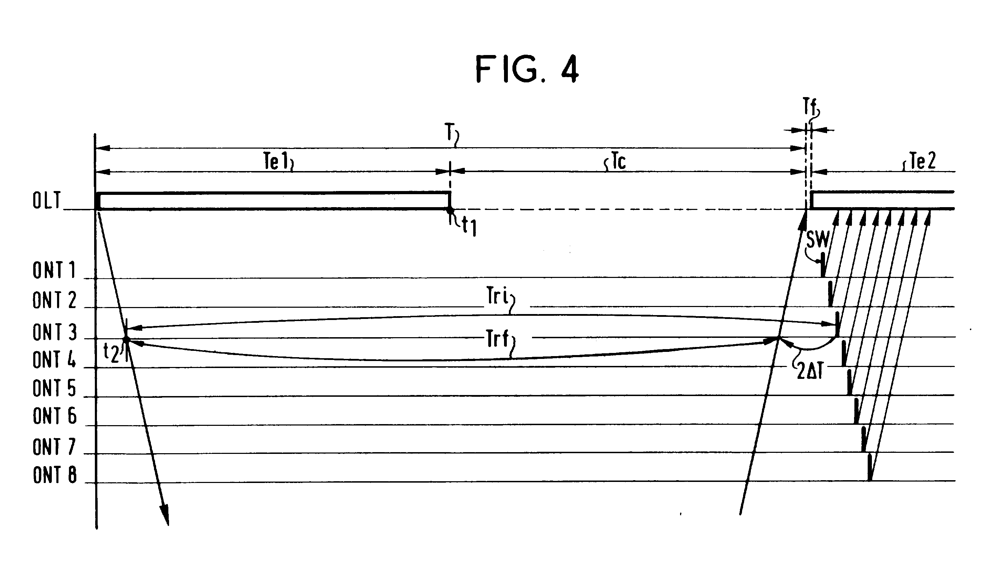

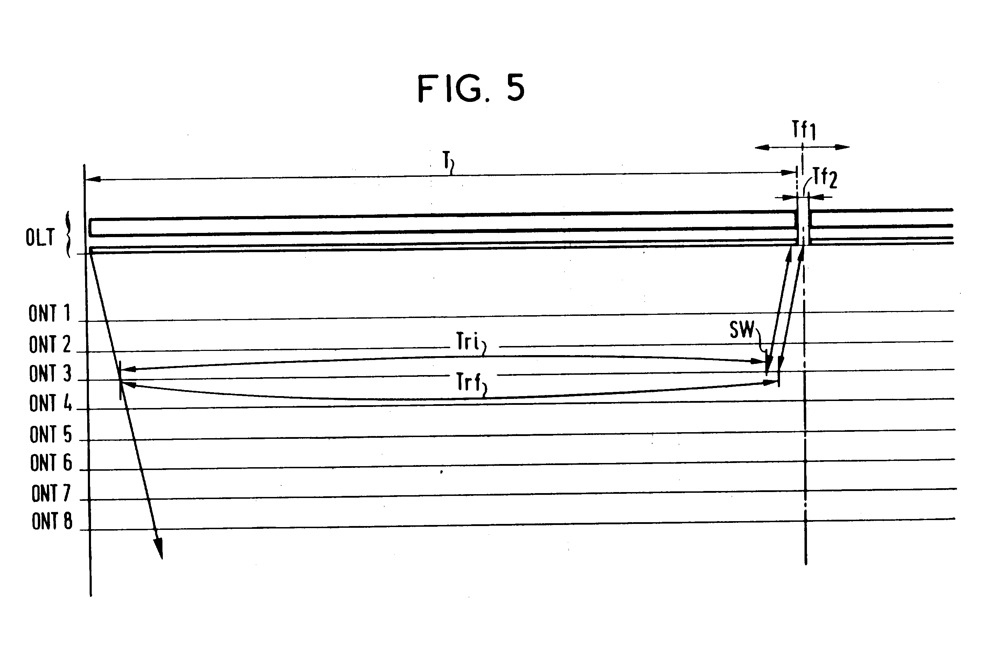

On peut aussi, comme décrit maintenant en relation avec les figures 4 et 5, utiliser une fenêtre de positionnement de largeur relativement faible, appelée aussi fenêtre de largeur réduite.

Soit T la période de transmission de la station centrale. Sur la figure 4, cette période de transmission inclut une période de temps affectée à l'émission et une période de temps affectée à la réception. Sur la première ligne du diagramme de la figure 4 est ainsi référencée Te la période d'émission dans le sens descendant, à savoir de la station centrale, notée OLT, vers "n" stations distantes, prises à titre d'exemple en nombre "n" égal à huit et notées respectivement ONT1, ONT2....ONT8. Deux périodes d'émission successives, notées respectivement Te1 et Te2 sont ainsi représentées sur la figure 4.

Dans les exemples de réalisation décrits, le format de transmission dans le sens descendant comporte au moins un emplacement temporel réservé à la transmission de signaux d'information particuliers, dits de signalisation, destinés à l'ensemble de ces stations.

Ces signaux de signalisation comportent, dans ces exemples, un signal dit d'adressage d'une station distante parmi "n", en vue de déclencher l'émission, par cette station distante, d'un signal de positionnement, noté SW. Contrairement à ce qui est le cas pour d'autres signaux de signalisation qui seront vus dans ce qui suit, l'émission de signaux d'adressage n'est subordonnée à aucune condition; elle est donc systématique et cyclique, les "n" stations distantes étant par exemple adressées à tour de rôle.

L'instant de réception d'un signal de positionnement, mesuré par la station centrale, par rapport à un instant de référence d'émission par cette station centrale, permet de connaître le temps de propagation entre cette station distante et la station centrale. Cet instant de référence, noté t1, est par exemple constitué par la fin de la période d'émission Te1.

Le signal de positionnement est émis par la station distante ainsi adressée, un temps de retard après un instant de référence de réception par cette station distante, cet instant de référence, noté t2, étant par exemple le début de la période de réception par la station distante, comme illustré à la quatrième ligne du diagramme pour la station ONT3 par exemple.

Ledit retard est en l'occurence susceptible de varier dans le temps, à partir d'une valeur de retard initiale telle que le signal de positionnement correspondant n'est pas nécessairement reçu dans la fenêtre de positionnement de largeur réduite, notée Tf, prévue à la station centrale dans la période de temps T-Te.

Dans les exemples de réalisation décrits, les signaux de signalisation comportent en outre un signal dit d'indication de non réception de signal de positionnement dans la fenêtre de positionnement.

Dans le cas où le signal de positionnnement n'est pas reçu dans cette fenêtre, ce qui est indiqué par ce signal d'indication de non réception de signal de positionnement dans la fenêtre de positionnement, la prochaine émission de signal de positionnement par la station distante considérée (déclenchée, comme il a été indiqué ci-desus, par un signal d'adressage) est effectuée avec un retard différent du précédent et tendant, sinon à faire tomber le signal de positionnement dans cette fenêtre de positionnement de largeur réduite, du moins à l'en rapprocher. Ce retard est par exemple obtenu en incrémentant automatiquement le retard précédent d'une valeur déterminée égale au pas de variation de ce retard.

Avantageusement, dans le cas où le signal de positionnement n'est pas reçu dans la fenêtre de positionnement de largeur réduite pour la valeur initiale de ce retard, la période de temps dans laquelle est reçu le signal de positionnement pour cette valeur initiale et pour les éventuelles valeurs intermédiaires comprises entre la valeur initiale et la valeur finale du retard pour laquelle le signal de positionnement est reçu dans cette fenêtre, est, quel que soit le système de transmission bidirectionnelle considéré (sur deux supports distincts ou à l'alternat sur un même support) une période de temps non affectée à la réception, par la station centrale, de signaux d'information, afin d'éviter toute possibilité de collision entre signaux d'information et de positionnement reçus par la station centrale.

Avantageusement encore, dans le cas de transmission bidirectionnelle à l'alternat sur un même support pour les deux sens de transmission, cette période de temps est une période de temps affectée à l'émission par la station centrale. En effet les problèmes liés à des collisions entre signaux d'information émis par la station centrale et signaux de positionnement émis par une station distante peuvent alors être résolus en choisissant, dans cette station centrale, des moyens de couplage émission-réception suffisamment performants pour que le niveau des signaux de positionnement reçus par cette station soit sans effet sur les signaux d'information émis par cette station.

Avantageusement encore, et comme illustré sur la figure 4, cette période de temps affectée à l'émission par la station centrale, est celle, notée Te2, qui suit celle notée Te1 comportant l'instant de référence t1, la fenêtre de positionnement de largeur réduite précédant en l'occurence immédiatement la période de temps Te2.

Le retard initial, noté Tri, sera alors avantageusement, comme illustré sur la figure 4, choisi égal à la durée T de la période de transmission. Dans ce cas, quelle que soit la station distante, le signal de positionnement n'est effectivement pas reçu dans la fenêtre de positionnement pour cette valeur initiale, et la variation du retard se fait alors, comme illustré sur la figure 4, par décroissance à partir de cette valeur initiale, jusqu'à une valeur finale notée Trf.

Il serait aussi possible de choisir une valeur de retard initiale inférieure à T, auquel cas la variation de ce retard se ferait par croissance a partir de cette valeur initiale.

Il serait aussi possible de prévoir comme période de temps affectée à l'émission, et dans laquelle tomberait le signal de positionnement pour les valeurs initiale et intermédiaires du retard, la période de temps $Te1$ contenant l'instant de référence $t1$ considéré, la fenêtre de positionnement de largeur réduite suivant par exemple immédiatement cette période de temps $Te1$.

Dans le cas ainsi considéré de transmission bidirectionnelle à l'alternat sur un même support, le pas de variation dudit retard est en outre avantageusement choisi égal à la largeur de la fenêtre de positionnement de largeur réduite.

Dans le cas, illustré sur la figure 5, de transmission bidirectionnelle sur deux supports séparés, les périodes d'émission et de réception par la station centrale, notées $Te$ et $Tr$ et illustrées respectivement sur la première et la deuxième ligne du diagramme de la figure 4 peuvent occuper la durée totale de la période de transmission T , à la largeur près de la fenêtre de positionnement de largeur réduite.

Cette fenêtre de positionnement a en outre avantageusement, afin de réduire le temps nécessaire à la recherche de la valeur finale de retard pour laquelle le signal de positionnement tombe dans cette fenêtre, une largeur variable dans le temps, ayant, en l'occurence dans un premier temps, une première largeur, étant alors notée $Tf1$, et dans un deuxième temps, une deuxième largeur inférieure à la première, étant notée $Tf2$, et le pas de variation dudit retard a, corrélativement, dans un premier temps, une première valeur, avantageusement égale à ladite première largeur, et dans un deuxième temps une deuxième valeur inférieure à la première, et avantageusement égale à ladite deuxième largeur, le procédé étant, pour chacun de ces temps, similaire à celui vu précédemment pour un seul temps, et le passage du premier temps au deuxième temps se produisant une fois le signal de positionnement reçu dans la fenêtre de positionnement ayant pour largeur ladite première largeur.

Dans tous les exemples ainsi considérés, le fait que la station centrale détecte le signal de positionnement dans dans la fenêtre de largeur réduite (ou de largeur la plus réduite dans le dernier exemple considéré) est indiqué à la station distante considérée, lors de son prochain adressage, au moyen d'un signal de signalisation spécifique, dit de détection de signal de positionnement dans la fenêtre de positionnement. Cette station distante transmet alors la valeur finale de retard Trf à la station centrale. La station centrale peut alors calculer le temps de propagation $\Delta T$ recherché, en l'occurence, compte tenu des instants de référence choisis, suivant la formule :

$$2 \, \Delta T = Te + Tc - Trf$$

où $Tc$ désigne la durée obtenue à l'issue du comptage effectué comme indiqué plus haut, dans la station centrale, et où $Te$ désigne la période d'émission par la station centrale. On notera que quels que soient les instants de référence choisis, le calcul du temps de propagation nécessite ainsi, suivant ce procédé :

- une mesure, par la station centrale, de l'intervalle de temps séparant l'instant de référence d'émission de signaux d'information par cette station centrale, de l'instant de réception, par cette station centrale, d'un signal de positionnement émis par une station distante un temps de retard après l'instant de référence de réception desdits signaux d'information par cette station distante, ce temps de retard étant déterminé pour que ce signal de positionnement soit effectivement reçu dans la fenêtre de positionnement considéré,
- une détermination, par cette station distante, de la valeur, dite finale, de retard, Trf, pour laquelle ce signal de positionnement est effectivement reçu dans cette fenêtre.

Lorsque le calcul du temps de propagation est effectué dans la station centrale, la valeur Trf est transmise par la station distante à la station centrale. Cette transmission de la valeur finale de retard Trf peut par exemple être effectuée au moyen d'un signal d'information particulier, également dit de signalisation, utilisé pour la transmission dans le sens montant.

Dans tous les exemples ainsi considérés, il est en outre avantageusement mis en oeuvre une procédure de variation de niveau dudit signal de positionnement, depuis une valeur extrême (minimale ou maximale) jusqu'à une valeur intermédiaire, variable en fonction de la station distante considérée et permettant l'obtention, à la station centrale, d'un niveau sensiblement identique pour les différentes stations distantes.

Le sens de la variation à appliquer, à cette fin, au niveau d'émission du signal de positionnement par la station distante, est par exemple déterminé à la station centrale et transmis à la station distante par l'intermédiaire d'un signal de signalisation spécifique dit de commande de variation de niveau.

La commande proprement dite du niveau d'émission du signal de positionnement peut être réalisée par tout moyen classique, non redécrit ici.

On notera que le récepteur prévu à la station centrale sera avantageusement choisi de manière à présenter une dynamique de réception la plus élevée possible afin de pouvoir recevoir à priori tout niveau émis par une station distante située à une distance quelconque de la station centrale.

Cette exigence quant à la qualité de ce récepteur peut se révéler moins contraignante dans le cas où la variation de ce niveau d'émission est effectuée en augmentant ce niveau à partir d'une valeur minimale, plutôt qu'en le réduisant à partir d'une valeur maximale.

On notera en outre que le seuil de détection de ce récepteur sera avantageusement choisi relativement bas lorsqu'il s'agit de détecter un signal de positionnement, afin d'accroître la probabilité de détection d'un tel signal, et relativement plus élevé lorsqu'il s'agit de détecter des signaux d'information, afin d'optimiser les conditions de réception de ces signaux d'information.

On notera également que dans le cas où ladite variation de niveau d'émission est effectuée en réduisant ce niveau à partir d'une valeur maximale, cette variation peut être effectuée une fois le signal de positionnement détecté dans la fenêtre de positionnement de largeur réduite (ou de largeur la plus réduite dans le dernier exemple considéré).

On notera par ailleurs que dans le cas où ladite variation de niveau d'émission est effectuée en augmentant ce niveau à partir d'une valeur minimale, on peut, suivant ladite valeur minimale, être amené à effectuer une telle variation de niveau, non seulement en vue de l'obtention, à la station centrale, d'un niveau sensiblement identique pour les différentes stations distante, comme indiqué ci-dessus, mais également pour pouvoir détecter le signal de positionnement, à la station centrale, dans la fenêtre de positionnement, de largeur réduite (ou de largeur la plus réduite dans le dernier exemple considéré). Deux conditions doivent alors être remplies pour pouvoir détecter un signal de positionnement dans la fenêtre de positionnement considérée, ces deux conditions étant, l'une qu'il ait été émis avec un retard adéquat, comme indiqué plus haut, et d'autre part qu'il ait un niveau suffisant. Par exemple, si le signal d'indication de non réception de signal de positionnement dans la fenêtre de positionnement indique une telle non détection, pour une valeur de retard et pour une valeur de niveau déterminées, tout ou partie de la plage de variation de niveau sera systématiquement explorée (par exemple par incrémentation systématique du niveau précédent d'une valeur déterminée égale au pas de variation de ce niveau) avant de passer éventuellement à la valeur de retard suivante.

## Revendications

1. Procédé d'allocation d'emplacements temporels pour transmission dans un système de transmission bidirectionnelle du type point-multipoint, à accès multiple par répartition temporelle, et à l'alternat, ledit système de transmission permettant des transmissions entre une station dite centrale (OLT) d'une part et des stations dites distantes (ONT) d'autre part, ladite allocation étant effectuée à raison d'au moins un emplacement temporel par station distante, et par sens de transmission, l'ensemble des emplacements temporels utilisés pour la transmission de la station centrale vers les stations distantes étant regroupé en trames dites descendantes, et l'ensemble des emplacements temporels utilisés pour la transmission des stations distantes vers la station centrale étant regroupé en trames dites montantes, caractérisé en ce que l'instant d'origine ($t''2$) des trames montantes, étant dans toute station distante, choisi de manière à ce que, dans la station centrale, l'instant ($t'2$) d'origine de ces trames soit séparé de l'instant ($t'1$) de fin des trames descendantes d'une durée inférieure à To, où To désigne le double du temps de propagation entre cette station distante et la station centrale, définissant ainsi, dans ladite station distante, une zone dite de recouvrement (T) entre trames descendantes et montantes, ladite allocation d'emplacements temporels est effectuée de façon à éviter toute coïncidence d'emplacements temporels alloués à une même station distante, respectivement dans les trames montantes et descendantes, dans ladite zone de recouvrement.

2. Procédé selon la revendication 1, caractérisé en ce que, lesdits emplacements temporels à allouer à une station distante, respectivement dans les trames montantes et descendantes, étant alloués l'un après l'autre, celui desdits emplacements qui est alloué après l'autre, est, dans le cas où cet autre emplacement n'est pas dans ladite zone de recouvrement, alloué de façon à obtenir une symétrie d'allocation dans les trames montantes et descendantes.

3. Procédé selon la revendication 1, caractérisé en ce que lesdits emplacements temporels à allouer à une station distante, respectivement dans les trames montantes et descendantes, étant alloués l'un après l'autre, celui desdits emplacements qui est alloué après l'autre est, dans le cas où cet autre emplacement est dans ladite zone de recouvrement, alloué par recherche d'un emplacement temporel non préalablement alloué dans les trames concernées et distinct dudit emplacement situé dans la zone de recouvrement.

4. Procédé selon l'une des revendications 2 et 3, caractérisé en ce que celui desdits emplacements temporels qui est alloué avant l'autre est alloué par recherche d'un emplacement temporel non préalablement alloué dans les trames concernées et distinct dudit emplacement situé dans la zone de recouvrement.

5. Procédé selon l'une des revendications 3 et 4, caractérisé en ce que ladite recherche est effectuée en envisageant successivement les différents emplacements desdites trames.

**Patentansprüche**

1. Verfahren zur Zuweisung von Zeitkanälen für die Übertragung in einem Übertragungssystem in beiden Richtungen zwischen einem Punkt und mehreren Punkten, mit Mehrfachzugriff im Zeitmultiplex und im Halbduplexbetrieb, wobei das Übertragungssystem Übertragungen zwischen einer Zentralstation (OLT) einerseits und entfernten Stationen (ONT) andererseits erlaubt und jeder entfernten Station mindestens ein Zeitkanal zugewiesen wird, wobei die Gesamtheit der für die Übertragung von der Zentralstation zu den entfernten Stationen verwendeten Zeitkanäle in sogenannte absteigende Rahmen und die Gesamtheit der für die Übertragung von den entfernten Stationen zur Zentralstation verwendeten Zeitkanäle in sogenannten aufsteigenden Rahmen zusammengefaßt sind, dadurch gekennzeichnet, daß der Ursprungszeitpunkt ($t''_2$) der aufsteigenden Rahmen in jeder entfernten Station so gewählt wird, daß in der Zentralstation der Ursprungszeitpunkt ($t'_2$) dieser Rahmen einen Abstand von dem Zeitpunkt ($t'_1$) des Endes der absteigenden Rahmen von einer Dauer kleiner als $T_0$ besitzt, wobei $T_0$ das Doppelte der Signallaufzeit zwischen dieser entfernten Station und der Zentralstation bezeichnet, wodurch in der entfernten Station eine Überlappungszone (T) zwischen dem absteigenden und aufsteigenden Rahmen definiert wird, und daß die Zuweisung von Zeitkanälen so erfolgt, daß jede Koinzidenz von Zeitkanälen, die einer gegebenen entfernten Station in den aufsteigenden bzw. absteigenden Rahmen zugewiesen sind, in der Überlappungszone vermieden wird.

2. Verfahren nach Anspruch 1, dadurch gekennzeichnet, daß die einer entfernten Station zuzuweisenden Zeitkanäle in den absteigenden bzw. aufsteigenden Zeitkanälen nacheinander zugewiesen werden und daß derjenige Kanal, der nach dem anderen zugewiesen wird, so zugewiesen wird, wenn dieser andere Kanal sich nicht in der Überlappungszone befindet, daß sich eine symmetrische Zuweisung in den aufsteigenden und absteigenden Rahmen ergibt.

3. Verfahren nach Anspruch 1, dadurch gekennzeichnet, daß die einer entfernten Station zuzuweisenden Zeitkanäle in den aufsteigenden und absteigenden Rahmen nacheinander zugewiesen werden und daß derjenige Kanal, der nach dem anderen zugewiesen wird, wenn dieser andere Kanal sich in der Überlappungszone befindet, durch Suche eines nicht vorab in den betreffenden Rahmen zugewiesenen Zeitkanals zugewiesen wird, der sich von dem in der Überlappungszone liegenden Zeitkanal unterscheidet.

4. Verfahren nach einem der Ansprüche 2 und 3, dadurch gekennzeichnet, daß derjenige der Zeitkanäle, der vor dem anderen zugewiesen wird, durch Suche eines nicht vorher in den betreffenden Rahmen zugewiesenen Zeitkanals zugewiesen wird, der sich von dem in der Überlappungszone befindlichen Zeitkanal unterscheidet.

5. Verfahren nach einem der Ansprüche 3 und 4, dadurch gekennzeichnet, daß die Suche durch aufeinanderfolgende Untersuchung der verschiedenen Zeitkanäle der Rahmen erfolgt.

**Claims**

1. Method of allocating time slots for transmission in a half-duplex time division multiple access point-to-multipoint bidirectional transmission system, said transmission system enabling transmission between a central station (OLT) and a plurality of remote stations (ONT), at least one time slot being allocated to each remote station and to each transmission direction, the set of all time slots used for transmission from the central station to the remote stations being grouped into downward frames and the set of all time slots used for transmission from the remote stations to the central station being grouped together in upward frames, characterised in that the origin time ($t''_2$) of the upward frames is chosen in each remote station so that in the central station the origin time ($t'_2$) of the frames is separated from the end time ($t'_1$) of downward frames by a period less than $T_0$ where $T_0$ is twice the transmission time between said remote station and the central station, whereby there is defined in said remote station an overlap area (T) between upward and downward frames, said time slots being allocated in such a way as to avoid any coincidence between time slots allocated to the same remote station in the upward and downward frames, respectively, in said overlap area.

2. Method according to claim 1 characterised in that said time slots are allocated to a remote station in the upward and downward frames, respectively, one after the other in such a manner that, that of said time slots which is allocated after the other time slot is, in the event that said other time slot is not in said overlap area, allocated in such manner as to achieve symmetry of allocation in the upward and downward frames.

3. Method according to claim 1 characterised in that said time slots to be allocated to a remote station in the upward and downward frames, respectively, are allocated one after the other, that of said time slots which is allocated after the other time slot is, in the event that said other time slot is in said overlap area, allocated by searching for a time slot not previously allocated in the frames concerned and separate from said time slot in the overlap area.

4. Method according to claim 2 or claim 3 characterised in that said time slot allocated before said other time slot is allocated by searching for a time slot not previously allocated in the frames concerned and separate from said time slot in the overlap area.

5. Method according to claim 3 or claim 4 characterised in that said search is effected by considering the various time slots of said frames successively.

# FIG. 1

# FIG. 2

# FIG. 3

Ik = 0

Ik ≤ Iu — non → faute

oui

Ik libre? — non → Ik = Ik+1

oui

Id = Ik → allocation de Id

Id ≥ ID — non → Iu = Id+ID

oui

Il = ID

Iu = Iu+1

Iu libre? — oui → allocation de Iu

non

Il libre? — non → Il = Il+1

oui

Id = Il ? — non → Iu = Il → allocation de Iu

oui

Il = Il+1

# FIG. 4

EP 0 555 595 B1

# FIG. 5

EP 0 555 595 B1